# EUROPÄISCHE PATENTANMELDUNG

(11) **EP 3 038 313 A1**
(43) Veröffentlichungstag der Anmeldung: **29.06.2016**
(21) Anmeldenummer: 14199923.5
(22) Anmeldetag: 23.12.2014
(51) Int. Cl.: H04L 29/06, H04L 12/707

(54) **Verfahren zur Übertragung von Daten in einem Automatisierungssystem mit einer verbesserten Absicherung der Daten gegen unberechtigtes Ausspähen, elektronisches Gerät zur Ausführung des Verfahrens und Automatisierungssystem mit zumindest einem derartigen Gerät**

(71) Anmelder: Siemens Aktiengesellschaft, 80333 München (DE)
(72) Erfinder: Palmin, Anna, 76187 Karlsruhe (DE)

(57) **Zusammenfassung**

Die Erfindung betrifft ein Verfahren zur Übertragung von Daten in einem Automatisierungssystem (10), wobei das Automatisierungssystem (10) eine Mehrzahl von mittels zumindest eines Bussystems (22) kommunikativ verbundenen Automatisierungsgeräten (20) umfasst, welches sich dadurch auszeichnet, dass beim Übertragen von Daten von und/oder zu einem von dem Automatisierungssystem (10) umfassten Automatisierungsgerät (20) variierende Übertragungsrouten verwendet werden, sowie ein Gerät (24) zur Implementation des Verfahrens und ein Automatisierungssystems (10), das zur Ausführung des Verfahrens zumindest ein derartiges Gerät (24) umfasst.

## Beschreibung

Die Erfindung betrifft zuvorderst ein Verfahren zur Übertragung von Daten in einem Automatisierungssystem mit einer verbesserten Absicherung der Daten gegen unberechtigtes Ausspähen, wobei das Automatisierungssystem eine Mehrzahl untereinander kommunikativ verbundener Automatisierungsgeräte umfasst und wobei die gegen unberechtigtes Ausspähen abzusichernden Daten von und/oder zu zumindest einem Automatisierungsgerät des Automatisierungssystems übertragen werden. Speziell betrifft die Erfindung dann auch in einem solchen Verfahren ein Verfahren zur kommunikativen Verbindung zweier oder mehrerer von dem Automatisierungssystem umfasster Automatisierungsgeräte oder ein Verfahren zur kommunikativen Verbindung zumindest eines von dem Automatisierungssystem umfassten Automatisierungsgeräts mit einem externen, nicht oder zumindest nicht dauerhaft zum Automatisierungssystem gehörenden Geräts, zum Beispiel einem Programmiergerät. Die Erfindung betrifft im Weiteren auch ein Gerät, insbesondere ein als Netzwerkknoten fungierendes Gerät oder ein Automatisierungsgerät, das zur Ausführung des Verfahrens bestimmt und eingerichtet ist, sowie ein Automatisierungssystem mit zumindest einem derartigen Gerät.

Bei heutigen Automatisierungssystemen, also Automatisierungslösungen mit einer Mehrzahl von untereinander kommunikativ verbundenen Automatisierungsgeräten, insbesondere speicherprogrammierbaren Steuerungen, dezentralen Feldgeräten und dergleichen, und den zugrunde liegenden Netzwerken werden innerhalb des Automatisierungssystems zu übertragende Datenpakete zwischen den einzelnen im Folgenden auch als Teilnehmer bezeichneten Geräten (Automatisierungsgeräten) über eine feste Übertragungsroute gesendet. Die feste Vorgabe der jeweiligen Übertragungsroute ergibt sich dabei aufgrund einer jeweiligen Konfiguration/Projektierung des Netzwerks.

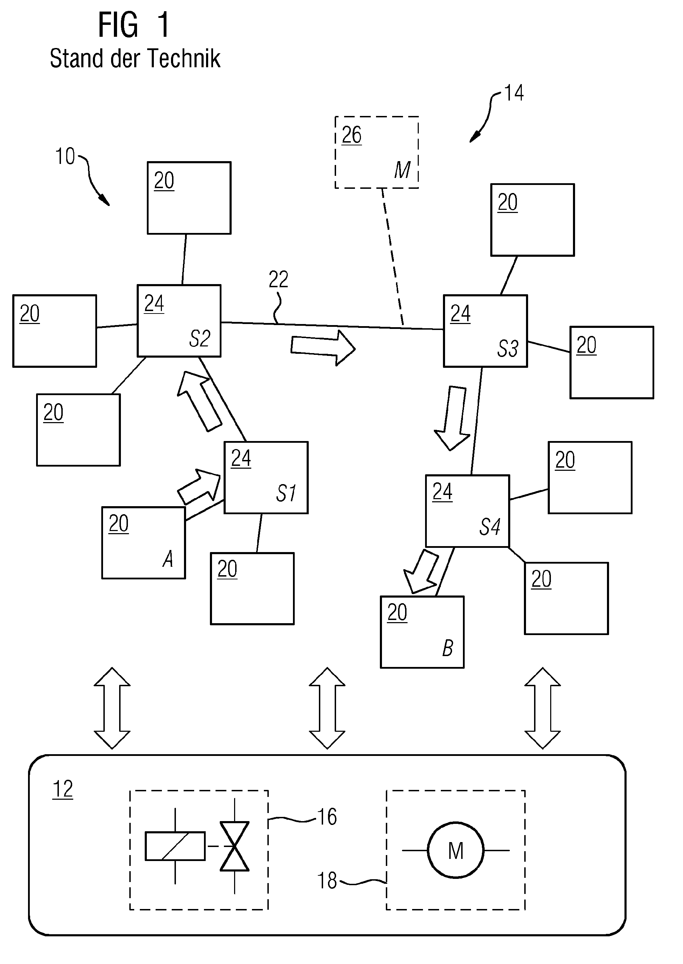

Die Darstellung in FIG 1 zeigt dazu in schematisch stark vereinfachter Form ein als Automatisierungssystem 10 zur Steuerung und/oder Überwachung eines nicht näher dargestellten technischen Prozesses 12 fungierendes Netzwerk 14. Der technische Prozess 12 umfasst in an sich bekannter Art und Weise Aktoren 16, 18 zur Beeinflussung des Prozesses 12 und nicht gezeigte Sensoren zur Aufnahme von Daten aus dem Prozess 12. Bei dem technischen Prozess 12 handelt es sich zum Beispiel um einen Produktionsprozess.

Das Automatisierungssystem 10 / das Netzwerk 14 umfasst eine Mehrzahl von untereinander kommunikativ verbundenen Automatisierungsgeräten 20, bei denen es sich zum Beispiel um Steuerungen, insbesondere speicherprogrammierbare Steuerungen oder NC-Steuerungen, Prozessrechner, dezentrale Feldgeräte, Bedien- und Beobachtungsstationen und dergleichen handelt. Die kommunikative Verbindung besteht dabei, indem die einzelnen Automatisierungsgeräte 20 (Teilnehmer) in an sich bekannter Art und Weise leitungslos oder leitungsgebunden an ein ebenfalls an sich bekanntes Bussystem 22, insbesondere einen Feldbus, angeschlossen sind.

Die kommunikative Verbindung kann in Form von mehr als einem Bussystem 22 bestehen, zum Beispiel derart, dass eine erste Gruppe von Automatisierungsgeräten 20 zur kommunikativen Verbindung untereinander an ein erstes Bussystem 22 angeschlossen ist und dass eine zweite Gruppe von Automatisierungsgeräten 20 oder weitere Gruppen von Automatisierungsgeräten 20 entsprechend an ein zweites Bussystem 22 bzw. weitere Bussysteme 22 angeschlossen ist bzw. sind. Bei einer Mehrzahl von Bussystemen 22 sind diese selbst in an sich bekannter Art und Weise kommunikativ verbunden, so dass auch eine kommunikative Verbindung zwischen einem Automatisierungsgerät 20 einer der von dem Automatisierungssystem 10 umfassten Gruppen und jedem Automatisierungsgerät 20 einer anderen Gruppe besteht oder zumindest hergestellt werden kann. In FIG 1 ist in der schematisch vereinfachten Darstellung ein Automatisierungssystem 10 mit einem Bussystem 22 gezeigt. Die Möglichkeit, dass das Automatisierungssystem 10 / das Netzwerk 14 mehrere Bussysteme 22 umfasst, ist im Folgenden stets mitzulesen. Des Weiteren werden im Folgenden die Begriffe Automatisierungssystem 10 und Netzwerk 14 mitunter synonym verwendet.

Das dem Netzwerk 14 zugrunde liegende Bussystem 22 umfasst einen oder mehrere Netzwerkknoten 24, also zum Beispiel sogenannte Switches. Die in FIG 1 exemplarisch gezeigten Netzwerkknoten 24 sind symbolisch mit S1, S2, S3 und S4 bezeichnet.

Für den Fall, dass von einem ersten Automatisierungsgerät 20 - in der Darstellung in FIG 1 symbolisch mit A bezeichnet - ein Datentelegramm und dessen Datenpaket oder dessen Datenpakete an ein zweites, entferntes Automatisierungsgerät 20 - in der Darstellung in FIG 1 zur Unterscheidung symbolisch mit B bezeichnet - gesendet werden sollen, passieren diese Datenpakete einzelne oder alle von dem Netzwerk 14 umfasste Netzwerkknoten 24. Die in FIG 1 gezeigten Blockpfeile symbolisieren einerseits die bei der Datenübertragung vom Teilnehmer A zum Teilnehmer B über das Bussystem 22 übertragenen Datenpakete und veranschaulichen andererseits die dabei benutzte Übertragungsroute und deren mitunter auch als Segmente bezeichneten Teilstrecken.

Falls die Datenpakete unverschlüsselt versendet und übertragen werden, kann ein in der Darstellung in FIG 1 symbolisch mit M bezeichneter Angreifer, zum Beispiel mittels eines temporär an das Bussystem 22 angeschlossenen Geräts 26, die übertragenen Datenpakete lesen. Voraussetzung ist dabei, dass sich der Angreifer M physikalischen Zugriff zu dem Bussystem 22 verschaffen kann, nämlich zu einer Teilstrecke der Übertragungsroute, und dass er ein geeignetes Computerprogramm zum Lesen der Datenpakete, also zum Beispiel einen Netzwerk-Monitor oder einen sogenannten Sniffer, verwendet.

Falls die mittels der Datenpakete übertragenen Daten vertraulich sind, kann eine Preisgabe ausgespähter Daten zu einem Schaden für das Unternehmen führen, welches das Automatisierungssystem 10 verwendet. Weiterhin ist auch eine Schädigung des oder der Unternehmen denkbar, von denen einzelne oder mehrere von dem Automatisierungssystem 10 umfasste Automatisierungsgeräte 20 oder die von den Automatisierungsgeräten 20 ausgeführten Steuerungsprogramme stammen. Darüber hinaus können die ausgespähten Daten bei einer entsprechenden Analyse auch mittelbar als Basis für einen sogenannten Man-in-the-Middle-Angriff verwendet werden.

Selbst wenn die Datenpakete bei der Übertragung vom Teilnehmer A zum Teilnehmer B verschlüsselt versandt werden, ist eine Kompromittierung der davon umfassten Daten möglich. Zur Verschlüsselung wird aus Effizienzgründen üblicherweise ein symmetrisches Verfahren verwendet. Dabei wird zur Verschlüsselung ein symmetrischer kryptographischer Schlüssel verwendet, der sowohl dem Teilnehmer A wie auch dem Teilnehmer B vorliegt. In diesem Fall kann ein Angreifer M, der sich einen physikalischen Zugriff zu einer Teilstrecke der Übertragungsroute verschafft hat, versuchen, den Schlüssel zu ermitteln. Dafür kommt zum Beispiel ein so genannter Brute-Force-Angriff in Betracht. Zusätzlich oder alternativ kann der Angreifer M auch versuchen, Zugriff auf den Ablageort des Schlüssels zu erhalten und den Schlüssel so direkt zu lesen. Falls dies gelungen ist, kann der Angreifer M mittels eines Netzwerk-Monitors oder eines Sniffers alle Datenpakete lesen und sie entschlüsseln. Alternativ kann der Angreifer M auf andere Art und Weise versuchen, das verwendete Verschlüsselungsverfahren zu kompromittieren oder Wissen zu erlangen, wie dieses kompromittiert werden kann. Wie zuvor bereits skizziert, kann eine Preisgabe der entschlüsselten Daten zu erheblichem Schaden führen.

In Anbetracht des in den letzten Jahren drastisch gestiegenen Bedrohungspotenzials besteht eine Aufgabe der vorliegenden Erfindung ausgehend von der vorgestehend skizzierten Problematik darin, eine Möglichkeit anzugeben, wie die Sicherheit der übertragenen Daten gegen unberechtigtes Ausspähen erhöht werden kann.

Diese Aufgabe wird erfindungsgemäß mittels eines Verfahrens zur Übertragung von Daten in einem Automatisierungssystem mit einer verbesserten Absicherung der Daten gegen unberechtigtes Ausspähen mit den Merkmalen des Anspruchs 1 gelöst. Dieses Verfahren wird im Folgenden mitunter auch kurz als Verfahren zum Betrieb eines Automatisierungssystems bezeichnet. Das Automatisierungssystem umfasst eine Mehrzahl kommunikativ miteinander verbundener Automatisierungsgeräte und der Austausch von Daten innerhalb des Automatisierungssystems findet von und/oder zu diesen Automatisierungsgeräten statt. Bei dem Verfahren ist zur verbesserten Absicherung der innerhalb des Automatisierungssystems übertragenen Daten gegen unberechtigtes Ausspähen vorgesehen, dass beim Übertragen von Daten von und/oder zu einem von dem Automatisierungssystem umfassten Automatisierungsgerät variierende Übertragungsrouten verwendet werden und dass eine variierte Übertragungsroute aus Teilstrecken zusammengesetzt ist und die Teilstrecken nach einem vorgegebenen oder vorgebbaren Schema oder nach einem Zufallsprinzip ausgewählt werden.

Das Verfahren kommt bei einer Datenübertragung innerhalb des Automatisierungssystems zur Anwendung, wenn also ein Datentelegramm von einem Automatisierungsgerät des Automatisierungssystems an ein anderes Automatisierungsgerät des Automatisierungssystems gesendet wird. Das Verfahren kommt genauso bei einer Datenübertragung in Betracht, an der zumindest ein nur zeitweise an das Bussystem des Automatisierungssystems angeschlossenes Gerät - im Folgenden kurz als externes Gerät bezeichnet - beteiligt ist, zum Beispiel ein von einem Berechtigten verwendetes Programmiergerät oder dergleichen. Bei einer solchen Datenübertragung wird ein Datentelegramm zwischen zumindest einem externen Gerät und zumindest einem von dem Automatisierungssystem umfassten Automatisierungsgerät übertragen. Die Variation der Übertragungsroute oder die Variation einzelner oder mehrerer Teilstrecken der Übertragungsroute findet bei beiden Szenarien automatisch innerhalb des Automatisierungssystems statt. Bei einer Kommunikation zwischen zumindest zwei Automatisierungsgeräten des Automatisierungssystems kann die Variation bereits bei dem als Sender fungierenden Automatisierungsgerät beginnen. Bei einer Kommunikation, an der zumindest ein externes Gerät beteiligt ist, kann die Variation beginnen, sobald das jeweilige Datentelegramm in das Automatisierungssystem gelangt ist.

Zur Variation einer Übertragungsroute werden die Teilstrecken, aus denen sich eine Übertragungsroute zusammensetzt, automatisch, also ohne Benutzereingriff, und nach einem vorgegebenen oder vorgebbaren Schema oder nach einem Zufallsprinzip ausgewählt. Die aufgrund einer solchen Auswahl resultierenden unterschiedlichen Teilstrecken führen insgesamt zu einer variierten Übertragungsroute und bei kontinuierlicher Anwendung des Verfahrens ergeben sich unterschiedliche Übertragungsrouten.

Für eine solche Auswahl unterschiedlicher Teilstrecken kommt zum Beispiel eine Variation sogenannter Routingtabellen in Betracht. Eine Routingtabelle wird bekanntlich von einem als Vermittlungsstelle fungierenden Netzwerkknoten innerhalb des Bussystems verwendet, um eingehende Datentelegramme entsprechend davon umfasster Adressinformationen, insbesondere der jeweiligen Zieladresse, gezielt im Bussystem in Richtung auf den Adressaten (Empfänger) des Datentelegramms weiterzuleiten. Je nach Richtung der Weiterleitung resultieren unterschiedliche Übertragungsrouten.

Bei einer Variation der Routingtabellen verwendet der Netzwerkknoten mehr als eine Routingtabelle, zum Beispiel zwei Routingtabellen. Zwischen diesen beiden Routingtabellen kann automatisch, also unter Kontrolle des Netzwerkknotens, zyklisch hin und her geschaltet werden. Dies ist ein Beispiel für eine Variation einer Übertragungsroute nach einem vorgegebenen Schema. Anstelle von zwei Routingtabellen kommt auch eine höhere Anzahl von Routingtabellen in Betracht, wobei zur Variation der Übertragungsroute zyklisch jeweils eine Routingtabelle eine bisher verwendete Routingtabelle ersetzt. Anstelle eines zyklischen Wechsels der Routingtabellen kommt auch ein Wechsel nach einem anderen Schema in Betracht, wobei in einer Liste zum Beispiel eine Reihenfolge vorgegeben wird, innerhalb derer die Routingtabellen automatisch angewandt werden sollen. Gleichfalls kommt eine zufällige Auswahl einer Routingtabelle in Betracht. Dabei wird mittels eines Zufallsgenerators automatisch durch den jeweiligen Netzwerkknoten aus einer Gruppe von Routingtabellen eine Routingtabelle ausgewählt, die für die Weiterleitung eingehender Datentelegramme so lange verwendet wird, bis mittels des Zufallsgenerators eine andere Routingtabelle ausgewählt wird und diese damit an die Stelle der bisher verwendeten Routingtabelle tritt.

Der Begriff Routingtabelle wird hier und im Folgenden als Oberbegriff für jedes Datum oder jeden Datensatz verwendet, der innerhalb eines Bussystems eine Basis für eine Weiterleitung eines Datentelegramms definiert. In einem besonders einfachen Fall definiert eine erste Routingtabelle zum Beispiel, dass alle eingehenden Telegramme über einen bestimmten Ausgangsport weitergeleitet werden. Eine zweite Routingtabelle definiert dann entsprechend zum Beispiel, dass alle eingehenden Telegramme über einen anderen Ausgangsport weitergeleitet werden. Durch eine automatische, alternierende Verwendung dieser beiden Routingtabellen durch einen Netzwerkknoten ergeben sich alternierend unterschiedliche Übertragungsrouten innerhalb des Netzwerks.

Der Vorteil des erfindungsgemäßen Ansatzes besteht darin, dass für einen Angreifer nicht erkennbar ist, über welche Übertragungsroute und welche Teilstrecken die bei einer Kommunikation innerhalb des Automatisierungssystems oder bei einer Kommunikation von und zu einem temporär an das Automatisierungssystem angeschlossenen externen Gerät übermittelten Daten übertragen werden. Das Risiko eines erfolgreichen Lauschangriffs ist dadurch bereits deutlich reduziert. Selbst wenn sich ein Angreifer physikalischen Zugang zu dem Bussystem des Automatisierungssystems verschafft, ist ein Ausspähen relevanter Daten nur dann möglich, wenn der Angreifer den physikalischen Zugriff (zufällig) an einer Teilstrecke des Bussystems vornimmt, die zu der Übertragungsroute der übermittelten Daten gehört.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens erfolgt eine Variation der Übertragungsroute oder einzelner Teilstrecken jeweils vor der Übermittlung eines Datentelegramms und des oder jedes davon umfassten Datenpakets. Dies führt zu einfachen Verhältnissen. Das gesamte Datentelegramm wird über dieselbe Übertragungsroute übermittelt. Vor der Übermittlung eines weiteren Datentelegramms kann die Übertragungsroute erneut verändert (variiert) werden.

Zur Variation der Übertragungsroute kommt zum Beispiel in Betracht, dass das Automatisierungsgerät, welches das Datentelegramm versenden will, vor dem Versand ein Datentelegramm in das Netzwerk gibt, das von allen an das Netzwerk angeschlossenen Kommunikationsteilnehmern empfangen wird und bei solchen Kommunikationsteilnehmern, insbesondere den Netzwerkknoten, welche die Übertragungsroute beeinflussen können, eine Variation der Übertragungsroute bewirkt. Dann ist für das Netzwerk insgesamt eine neue Übertragungsroute eingestellt. Alternativ ist ebenfalls möglich, dass ein solches, die Übertragungsrouten im Netzwerk beeinflussendes Datentelegramm von einem speziellen Gerät, insbesondere einem innerhalb des Automatisierungssystems als sogenannter Busmaster fungierenden Gerät, nach einem festen Zeitplan oder zu zufälligen Zeitpunkten ausgesendet wird und sich danach jeweils neue Übertragungsrouten im Netzwerk ergeben. Bei einer solchen von einer zentralen Stelle ausgelösten Variation der Übertragungsrouten kommt bei jedem Gerät, das die Übertragungsroute beeinflussen kann, also insbesondere bei jedem Netzwerkknoten, in Betracht, dass eine bereits begonnene Weiterleitung eines mehrere Datenpakete umfassenden Datentelegramms mit der bisherigen Übertragungsroute fortgesetzt wird oder dass während der Weiterleitung, also zwischen zwei Datenpaketen, eine Variation der Übertragungsroute durch Auswahl einer von den jeweiligen Netzwerkknoten ausgehenden neuen Teilstrecke erfolgt.

Zusätzlich oder alternativ ist ebenfalls möglich und kommt gemäß dem hier beschriebenen Ansatz ebenfalls in Betracht, dass die Variation der Übertragungsroute, nämlich die Variation einer einzelnen Teilstrecke der Übertragungsroute, vor Übermittlung eines Datentelegramms individuell durch jeden Netzwerkknoten erfolgt, bei dem das Datentelegramm zur Weiterleitung eingeht. Abhängig von der jeweiligen Teilstrecke, die aufgrund der Variation der Übertragungsroute durch einen Netzwerkknoten bei diesem ausgewählt wird, gelangt das Datentelegramm zum Empfänger oder zu weiteren Netzwerkknoten. Jeder weitere Netzwerkknoten nimmt erneut eine solche Variation der Übertragungsroute durch Auswahl einer Teilstrecke vor.

Durch eine solche Variation der Übertragungsroute vor der Übermittlung eines Datentelegramms ist eine deutlich erhöhte Sicherheit erreicht, denn im Rahmen einer üblichen Kommunikationsbeziehung zwischen zwei von dem Automatisierungssystem umfassten Automatisierungsgeräten oder einem externen Gerät und einem von dem Automatisierungssystem umfassten Automatisierungsgerät werden üblicherweise eine Vielzahl von Datentelegrammen ausgetauscht und selbst wenn es dem Angreifer gelingen sollte, eines dieser Datentelegramme auszuspähen, ist es aufgrund der automatischen Variation der Übertragungsroute sehr unwahrscheinlich, dass dem Angreifer auch das Ausspähen weiterer Datentelegramme gelingt.

Bei einer zusätzlichen oder alternativen Ausführungsform des Verfahrens wird die Übertragungsroute während der Übermittlung eines Datentelegramms variiert, zum Beispiel nach jedem n-ten Datenpaket. Dies erhöht die Sicherheit der übertragenen Daten erheblich. Selbst wenn es einem Angreifer gelingen sollte, physikalischen Zugang zu dem Bussystem und zu einem Segment der Übertragungsroute zu erhalten, vermag er nur diejenigen Datenpakete auszuspähen, die über die betreffende Teilstrecke der Übertragungsroute übertragen werden, bis die Übertragungsroute wieder wechselt (variiert wird). Die Variation der Übertragungsroute kann nach jedem Datenpaket oder nach jedem zweiten, dritten, vierten usw. Datenpaket erfolgen. Die erreichbare Sicherheit steigt, wenn die Übertragungsroute auch während der Übertragung eines Datentelegramms häufig wechselt. Je häufiger die Übertragungsroute wechselt, desto unwahrscheinlicher ist es, dass der Angreifer die Möglichkeit erhält, ein vollständiges Datentelegramm mit allen zugehörigen Datenpaketen auszuspähen. Hier erfolgt die Variation - wie oben bereits beschrieben - bevorzugt durch jeden Netzwerkknoten, bei dem das zu übertragende Datentelegramm zur Weiterleitung eingeht. Jeder insofern an der Übermittlung des Datentelegramms beteiligte Netzwerkknoten wählt zum Beispiel nach jedem n-ten Datenpaket eine neue Teilstrecke aus und bewirkt damit im Vergleich zur Übertragung der vorangehenden Datenpakete eine Verwendung einer neuen Übertragungsroute.

Allgemein lassen sich die beiden beschriebenen Variationsmöglichkeiten vor bzw. während der Übermittlung des Datentelegramms dahingehend zusammenfassen, dass die Variation der jeweiligen Übertragungsroute durch jeden beim Übertragen/Weiterleiten des Datentelegramms innerhalb des Automatisierungssystems involvierten Netzwerkknoten erfolgt, indem jeder derartige Netzwerkknoten nach einem vorgegebenen oder vorgebbaren Schema oder nach einem Zufallsprinzip eine Teilstrecke zu einem anderen Netzwerkknoten oder einem Automatisierungsgerät auswählt.

Bei einer besonderen Ausführungsform des Verfahrens werden die übertragenen Daten verschlüsselt, wobei insbesondere für einzelne Teilstrecken der jeweiligen Übertragungsroute für die Verschlüsselung unterschiedliche Schlüssel und/oder unterschiedliche Verschlüsselungsverfahren verwendet werden. Dies erhöht die Datensicherheit nochmals ganz erheblich. Selbst wenn es einem Angreifer gelingen sollte, physikalischen Zugang zu dem Bussystem und zu einem der Segmente der Übertragungsroute zu erhalten, ist ein Ausspähen der Datenpakete durch deren Verschlüsselung verhindert. Selbst wenn es dem Angreifer gelingen sollte, einen Schlüssel zu ermitteln oder in Erfahrung zu bringen, ist ein Entschlüsseln der über das jeweilige Segment, auf das sich der Angreifer Zugriff verschafft hat, übertragenen Daten nur dann möglich, wenn der Schlüssel (zufällig) gerade dem Schlüssel entspricht, mit dem das oder die über dieses Segment übertragenen Datenpakete verschlüsselt sind. Wenn zusätzlich noch das bei der Verschlüsselung jeweils verwendete Verschlüsselungsverfahren automatisch variiert wird, ist eine Entschlüsselung selbst dann nicht möglich, wenn der Angreifer sich zwar in den Besitz des jeweiligen Schlüssels gebracht hat, aber das Verschlüsselungsverfahren nicht kennt.

Insgesamt ist die Erfindung auch ein zur automatischen Ausführung des Verfahrens und ggf. einzelner Ausgestaltungen bestimmtes und eingerichtetes elektronisches Gerät, also zum Beispiel ein in einem Netzwerk als Netzwerkknoten fungierendes Gerät. Das Gerät weist Mittel zur automatischen Variation einer Übertragungsroute für eingehende und weitergeleitete Datenpakete auf.

Die automatische Variation der Übertragungsroute ist bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein elektronisches Gerät der oben genannten Art, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnungen näher erläutert. Einander entsprechende Gegen-stände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem mit in einem Netzwerk kommunikativ verbundenen Automatisierungsgeräten,
- FIG 2: ein Automatisierungssystem wie in FIG 1 mit einer Illustration eines Ergebnisses einer Implementation des hier vorgeschlagenen Ansatzes und
- FIG 3: ein elektronisches Gerät zur Implementation des hier vorgeschlagenen Ansatzes.

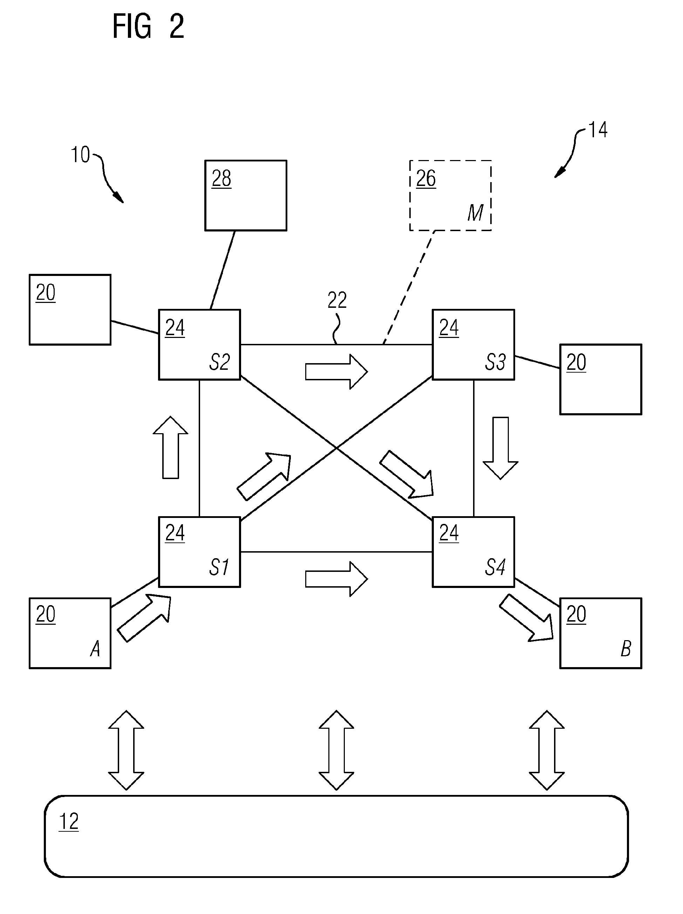

Die Darstellung in FIG 1 ist in der Beschreibungseinleitung erläutert worden, so dass hier darauf verwiesen werden kann. Die Darstellung in FIG 2 zeigt ein Automatisierungssystem 10 und ein zugrunde liegendes Netzwerk 14 wie in FIG 1, allerdings mit einer im Interesse der Übersicht reduzierten Anzahl von Details. Die Anzahl der von dem Automatisierungssystem 10/dem Netzwerk 14 umfassten Automatisierungsgeräte 20 und Netzwerkknoten 24 ist grundsätzlich beliebig und zumindest durch das hier vorgeschlagene Verfahren in keiner Weise begrenzt. Abweichend von der exemplarisch in FIG 1 gezeigten Situation umfasst das Netzwerk 14 gemäß FIG 2 zusätzliche Kommunikationspfade zwischen den Netzwerkknoten 24. Beim dargestellten Beispiel handelt es sich exemplarisch um zusätzliche Kommunikationspfade, mittels derer jeder der vier gezeigten Netzwerkknoten 24 mit jedem anderen Netzwerkknoten 24 verbunden ist.

Bei der Situation gemäß FIG 1 ist eine Übertragung eines Datentelegramms von einem ersten Automatisierungsgerät 20 (Teilnehmer A) zu einem zweiten Automatisierungsgerät 20 (Teilnehmer B) nur über genau eine Übertragungsroute, nämlich eine die Netzwerkknoten 24 in genau einer Reihenfolge (S1, S2, S3, S4) einschließende Übertragungsroute, möglich. Bei der Situation gemäß FIG 2 sind demgegenüber aufgrund der zusätzlichen Kommunikationspfade zwischen den Netzwerkknoten 24 bei einer Übertragung eines Datentelegramms vom Teilnehmer A zum Teilnehmer B unterschiedliche Übertragungsrouten möglich, nämlich (in symbolischer Notation) zumindest die folgenden Übertragungsrouten:
A, S1, S2, S3, S4, B;
A, S1, S3, S4, B;
A, S1, S2, S4, B;
A, S1, S2, B.

Bei dem hier vorgeschlagenen Ansatz ist zur Erhöhung der Sicherheit der innerhalb des Automatisierungssystems 10 und des zugrunde liegenden Netzwerks 14 übertragenen Daten eine automatische Variation der Übertragungsroute vorgesehen. Bei den Daten, die auf diese Weise gegen einen unberechtigten Zugriff durch einen Angreifer M gesichert werden sollen, handelt es sich um die Nutzdaten eines Datenpakets oder einer Mehrzahl von Datenpaketen eines ganz oder zumindest teilweise innerhalb des Automatisierungssystems 10 übertragenen Datentelegramms. Bei einem innerhalb des Automatisierungssystems 10 übertragenen Datentelegramm handelt es sich um ein Datentelegramm, das von einem Automatisierungsgerät 20 (Sender; Teilnehmer A) des Automatisierungssystems 10 an ein anderes Automatisierungsgerät 20 (Empfänger; Teilnehmer B) desselben Automatisierungssystems 10 gesendet wird. Bei einem zumindest teilweise innerhalb des Automatisierungssystems 10 übertragenen Datentelegramm handelt es sich um ein Datentelegramm, bei dem ein durch einen Berechtigten an das Automatisierungssystem 10 angeschlossenes externes Gerät 28, zum Beispiel ein Programmiergerät oder dergleichen, und zumindest ein Automatisierungsgerät 20 des Automatisierungssystems als Sender und Empfänger fungieren.

Die Variation der Übertragungsroute findet dabei automatisch, also ohne Eingriff des Betreibers des Automatisierungssystems 10 oder des Verwenders des externen Geräts 28, innerhalb des Automatisierungssystems 10 statt. Wenn zumindest ein von dem Automatisierungssystem 10 umfasstes Automatisierungsgerät 20 kommunikativ direkt mit mehreren Automatisierungsgeräten 20 oder Netzwerkknoten 24 verbunden ist (nicht gezeigt), kann die Variation der Übertragungsroute bereits bei dem jeweiligen Automatisierungsgerät 20 beginnen. Die nachfolgende Beschreibung wird - ohne Verzicht auf eine weitergehende Allgemeingültigkeit - anhand der in FIG 2 gezeigten Situation mit unterschiedlichen Kommunikationspfaden zwischen als Netzwerkknoten 24 fungierenden Geräten fortgesetzt. Entsprechend fungieren die Netzwerkknoten 24 als Mittel zur Ausführung des hier vorgeschlagenen Verfahrens und gegebenenfalls einzelner Ausführungsformen.

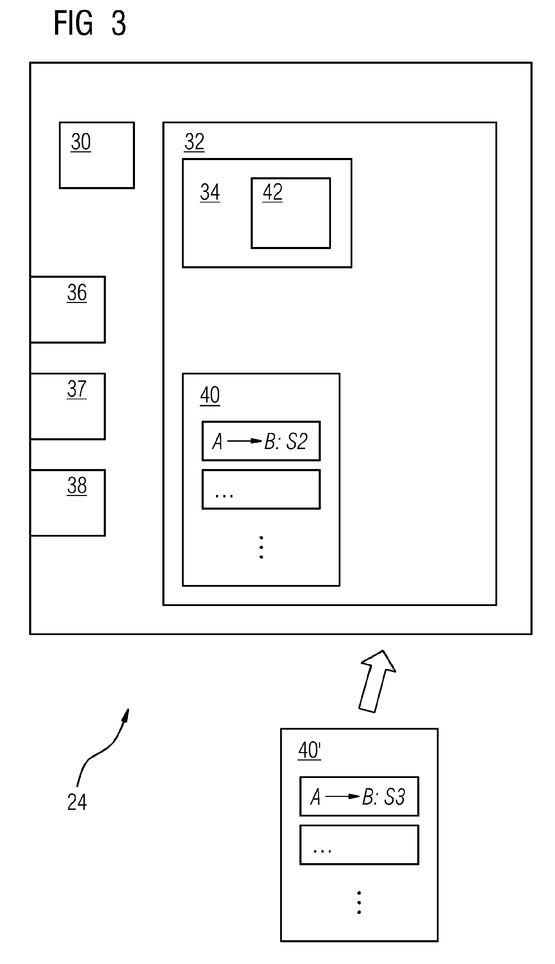

Jeder Netzwerkknoten 24 - oder allgemein jedes zur Ausführung des hier vorgeschlagenen Verfahrens bestimmte und als Kommunikationsteilnehmer innerhalb des Automatisierungssystems 10 fungierende elektronische Gerät - umfasst in an sich bekannter Art und Weise eine Verarbeitungseinheit 30 in Form von oder nach Art eines Mikroprozessors sowie einen Speicher 32 mit einem durch die Verarbeitungseinheit 30 ausführbaren und als Steuerungsprogramm 34 fungierenden Computerprogramm, wie dies schematisch vereinfacht in der Darstellung in FIG 3 gezeigt ist.

Das Steuerungsprogramm 34 bestimmt die Funktionalität des Netzwerkknotens 24. Das Steuerungsprogramm 24 kann - wie in der Darstellung exemplarisch gezeigt - bei einer Implementation in Software in einen Speicher 32 des Netzwerkknotens 24 geladen sein. Genauso kann das Steuerungsprogramm 24 in Firmware oder in Firm- und Software implementiert sein. Beides ist im Folgenden als gleichwertige Möglichkeit stets mitzulesen.

Der Netzwerkknoten 24, insbesondere ein Netzwerkknoten 24 in Form eines so genannten Switch, weist in an sich bekannter Art und Weise ein oder mehrere Anschlussstellen - im Folgenden kurz als Ports 36, 37, 38 bezeichnet - auf, mittels derer er an das jeweilige Netzwerk 14 angeschlossen ist und über die in dem Netzwerk 14 übermittelte Datentelegramme empfangen oder weitergeleitet werden. Bei einer Situation wie in FIG 1 gezeigt empfängt der symbolisch mit S1 bezeichnete Netzwerkknoten 24 ein Datentelegramm von dem Teilnehmer A an dem Port 36-38, an den der Teilnehmer A mittelbar oder unmittelbar angeschlossen ist. Die Weiterleitung des so empfangenen Datentelegramms an den symbolisch mit S2 bezeichneten Netzwerkknoten 24 erfolgt, indem das empfangene Datentelegramm über denjenigen Port 36-38 ausgegeben wird, an den dieser Netzwerkknoten 24 (S2) mittelbar oder unmittelbar angeschlossen ist.

Dafür umfasst der Netzwerkknoten 24 (S1) und jeder andere Netzwerkknoten 24 einen üblicherweise als Routingtabelle 40 bezeichneten Datensatz. Diese ist zum Beispiel in den Speicher 32 des Netzwerkknotens 24 geladen (siehe FIG 3). Die Funktion einer Routingtabelle 40 und die Verarbeitung der davon umfassten Daten sind an sich bekannt und bedürfen hier keiner eingehenden Erläuterung. Kurz gefasst "weiß" der Netzwerkknoten 24 anhand der Daten der Routingtabelle 40, auf welchem Wege ein in einem empfangenen Datentelegramm adressierter Empfänger erreichbar ist, so dass sich anhand solcher Daten ergibt, auf welchem Wege, also zum Beispiel über welchen Port 36-38 aus einer Mehrzahl von Ports 36-38, ein empfangenes Datentelegramm weiterzuleiten ist.

Indem die Routingtabelle 40 oder jeder andere funktionsäquivalente Datensatz bestimmt, auf welchem Wege ein empfangenes Datentelegramm innerhalb des Netzwerks 14 weitergeleitet wird, kommen solche Daten auch für die hier vorgeschlagene Variation der Übertragungsrouten in Betracht. Wenn sich zum Beispiel anhand der Daten einer (herkömmlichen) Routingtabelle 40 ergibt, dass ein für das in der Darstellung in FIG 1 symbolisch mit B bezeichnetes Automatisierungsgerät 20 bestimmtes Datentelegramm von dem symbolisch mit S1 bezeichneten Netzwerkknoten 24 über denjenigen Port 36-38 weiterzuleiten ist, über den der symbolisch mit S2 bezeichnete Netzwerkknoten 24 erreichbar ist (in FIG 3 als "A→B: S2" angegeben), kann zur Variation der Übertragungsroute eine alternative Routingtabelle 40' in den Speicher 32 des Netzwerkknotens 24 (S1) geladen werden, die für ein solches Datentelegramm definiert, dass dieses über denjenigen Port 36-38 weiterzuleiten ist, über den der symbolisch mit S3 bezeichnete Netzwerkknoten 24 erreichbar ist (in FIG 3 als "A→B: S3" angegeben). Wenn zwei oder mehr derartige Routingtabellen 40, 40' zyklisch ausgetauscht werden, ergeben sich automatisch unterschiedliche (variierende) Übertragungsrouten innerhalb des Netzwerks 14, so wie dies schematisch vereinfacht in der Darstellung in FIG 2 mittels der dort eingezeichneten Blockpfeile gezeigt ist.

Die Variation mehrerer Routingtabellen 40, 40' erfolgt automatisch durch den jeweiligen Netzwerkknoten 24 unter Kontrolle von dessen Steuerungsprogramm 34. Jede dabei verwendete Routingtabelle 40, 40' mit vorgegebenen oder durch einen Benutzer vorgebbaren Weiterleitungsregeln kann bereits anfänglich in dessen Speicher 32 geladen und unter Kontrolle des Steuerungsprogramms 34 einzeln zur Verwendung aktiviert werden. Ein zugrunde liegendes Aktivierungsschema kann zum Beispiel bestimmen, dass anstelle einer momentan verwendeten Routingtabelle 40, 40' nach Verstreichen einer vorgegebenen oder vorgebbaren Zeitspanne eine andere Routingtabelle 40, 40' verwendet wird. Die Zeitspanne kann dabei auch durch einen Zufallsgenerator bestimmt oder beeinflusst sein. Als andere Routingtabelle 40, 40', die an die Stelle der bisher verwendeten Routingtabelle 40, 40' tritt, kommt zum Beispiel eine der momentan verwendeten Routingtabellen 40, 40' nachfolgende Routingtabelle 40, 40' in Betracht, nämlich dieser nachfolgend zum Beispiel im Speicher 32 oder in einer nicht gezeigten Speicherstruktur, zum Beispiel einem Datenfeld (englisch: Array), einer verketteten Liste oder dergleichen. Genauso kann vorgesehen sein, dass unter Kontrolle des Steuerungsprogramms 34 automatisch eine Routingtabelle 40, 40' aus einer Mehrzahl von Routingtabellen 40, 40' mittels eines Zufallsgenerators ausgewählt wird. Schließlich kommt auch noch in Betracht, den Austausch einer Routingtabelle 40, 40' gegen eine andere (folgende oder zufällig ausgewählte) Routingtabelle 40, 40' von den mittels des jeweiligen Netzwerkknotens 24 weitergeleiteten Daten abhängig zu machen, zum Beispiel derart, dass nach bestimmten, anhand ihrer Empfänger- oder Empfänger- und Senderkennung unterscheidbaren Datentelegrammen ein Austausch erfolgt, zum Beispiel immer dann, wenn ein Datentelegramm vom Teilnehmer A an den Teilnehmer B weitergeleitet wird. Bei umfangreichen Datenmengen eines Datentelegramms ist eine Aufteilung in einzelne Datenpakete üblich. Entsprechend kann genauso oder zusätzlich ein Austausch einer Routingtabelle 40, 40' anhand der Anzahl der jeweils weitergeleiteten Datenpakete erfolgen, zum Beispiel indem unter Kontrolle des Steuerungsprogramms 34 mit jedem weitergeleiteten Datenpaket ein Zähler inkrementiert wird und der Austausch bei Erreichen eines vorgegebenen oder vorgebbaren Zählerstands erfolgt. Auf diese Weise kann zum Beispiel erreicht werden, dass nach jedem zehnten, fünften oder auch nach jedem einzelnen Datenpaket der Austausch erfolgt und sich demgemäß unterschiedliche Übertragungsraten ergeben.

Die vorbeschriebenen Möglichkeiten sind zum Großteil auch kombinierbar, zum Beispiel derart, dass der Zählerstand, bei dessen Erreichen der Austausch der Routingtabellen 40, 40' erfolgt, Ergebnis einer Berechnung auf Basis eines Zufallsgenerators ist. Anstelle eines Austausches nach n Datenpaketen kann auch ein Austausch der Routingtabellen 40, 40' nach n hinsichtlich ihrer Empfänger- oder Empfänger- und Senderkennung übereinstimmenden Datentelegrammen erfolgen.

Das Steuerungsprogramm 34 oder eine Teilfunktionalität des Steuerungsprogramms 34 ist damit ein Beispiel für ein zeit- und/oder ereignisgesteuertes Umschaltmittel 42. Dieses bewirkt die automatische Variation einer Übertragungsroute oder - bei andauerndem Betrieb - einer Mehrzahl von Übertragungsrouten innerhalb des Netzwerks 14. Indem das Steuerungsprogramm 34 zum Beispiel zeit- und/oder ereignisgesteuert die Verwendung einer von mehreren Routingtabellen 40, 40' bewirkt, ergibt sich beim Betrieb des Automatisierungssystems 10, dass die beim Übertragen von Datentelegrammen verwendeten und aus Teilstrecken zusammengesetzten Übertragungsrouten variieren und die Teilstrecken nach einem vorgegebenen oder vorgebbaren Schema (zum Beispiel aufgrund zyklisch ausgetauschter Routingtabellen 40, 40') oder nach einem Zufallsprinzip (zum Beispiel aufgrund zufällig ausgewählter Routingtabellen 40, 40') ausgewählt werden.

Genauso, wie mittels des Steuerungsprogramms 34 automatisch die oben beschriebene Variation der zur Weiterleitung von Datentelegrammen oder Datenpaketen verwendeten Kommunikationspfade in dem jeweiligen Netzwerk 14 und die resultierende Variation der Übertragungsroute(n) bewirkt wird, kann mittels des Steuerungsprogramms 34 auch eine Verschlüsselung mit einem vorgegebenen Schlüssel oder eine variierende Verschlüsselung mit jeweils einem Schlüssel aus einer Gruppe von Schlüsseln und/oder eine variierende Verwendung von Verschlüsselungsalgorithmen aus einer Gruppe von Verschlüsselungsalgorithmen bewirkt werden. Bei mehreren Schlüsseln und/oder Verschlüsselungsalgorithmen kann dessen bzw. deren Auswahl (Variation) ebenso zeit- und/oder ereignisgesteuert und automatisch unter Kontrolle des Steuerungsprogramms 34 erfolgen, wie dies oben am Beispiel der Routingtabellen 40, 40' erläutert wurde. Dafür kommt ebenfalls das in FIG 3 gezeigte Umschaltmittel 42 oder alternativ ein entsprechendes weiteres Umschaltmittel in Betracht.

Indem jeder Netzwerkknoten 24 (unabhängig von dem oder jedem entlang der jeweiligen Übertragungsroute vorangehenden und nachfolgenden Netzwerkknoten 24) die beschriebene Variation der Weiterleitung empfangener Datentelegramme, insbesondere die beschriebene Variation von Routingtabellen 40, 40' oder dergleichen, vornimmt, ergibt sich eine erhebliche Vielzahl möglicher Übertragungsrouten zwischen einem Sender und einem Empfänger, die es einem potentiellen Angreifer deutlich erschwert, innerhalb des Automatisierungssystems 10 übermittelte Daten auszuspähen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur Übertragung von Daten in einem Automatisierungssystem 10 mit einer verbesserten Absicherung der übertragenen Daten gegen unberechtigtes Ausspähen, wobei das Automatisierungssystem 10 eine Mehrzahl von mittels zumindest eines Bussystems 22 kommunikativ verbundenen Automatisierungsgeräten 20 umfasst, welches sich dadurch auszeichnet, dass beim Übertragen von Daten innerhalb des Automatisierungssystems 10 von und/oder zu einem von dem Automatisierungssystem 10 umfassten Automatisierungsgerät 20 variierende Übertragungsrouten verwendet werden, sowie ein Gerät 24 zur Implementation des Verfahrens und ein Automatisierungssystems 10, das zur Ausführung des Verfahrens zumindest ein derartiges Gerät 24, üblicherweise eine Mehrzahl solcher Geräte 24, umfasst.

## Patentansprüche

1. Verfahren zur Übertragung von Daten in einem Automatisierungssystem (10) mit einer verbesserten Absicherung der Daten gegen unberechtigtes Ausspähen,
wobei das Automatisierungssystem (10) eine Mehrzahl kommunikativ verbundener Automatisierungsgeräte (20) umfasst, **dadurch gekennzeichnet,**
**dass** beim Übertragen von Daten innerhalb des Automatisierungssystems (10) von und/oder zu einem von dem Automatisierungssystem (10) umfassten Automatisierungsgerät (20) variierende Übertragungsrouten verwendet werden und
**dass** eine variierte Übertragungsroute aus Teilstrecken zusammengesetzt ist und die Teilstrecken nach einem vorgegebenen oder vorgebbaren Schema oder nach einem Zufallsprinzip ausgewählt werden.

2. Verfahren nach Anspruch 1, wobei die Übertragungsroute jeweils vor der Übermittlung eines Datentelegramms variiert wird.

3. Verfahren nach einem der Ansprüche 1 oder 2, wobei die Übertragungsroute während der Übermittlung eines Datentelegramms variiert wird.

4. Verfahren nach einem der vorangehenden Ansprüche, wobei das Automatisierungssystem (10) zur kommunikativen Verbindung der davon umfassten Automatisierungsgeräte (20) eine Mehrzahl von Netzwerkknoten (24) umfasst und wobei die Variation einer Übertragungsroute durch jeden beim Übertragen von Daten innerhalb des Automatisierungssystems (10) involvierten Netzwerkknoten (24) erfolgt, indem der Netzwerkknoten (24) nach einem vorgegebenen oder vorgebbaren Schema oder nach einem Zufallsprinzip eine Teilstrecke zu einem anderen Netzwerkknoten (24) oder einem Automatisierungsgerät (20) auswählt.

5. Verfahren nach einem der vorangehenden Ansprüche, wobei die übertragenen Daten verschlüsselt werden und wobei für einzelne Teilstrecken für die Verschlüsselung unterschiedliche Schlüssel und/oder unterschiedliche Verschlüsselungsverfahren verwendet werden.

6. Elektronisches Gerät (24), das dafür bestimmt und eingerichtet ist, um in einem Automatisierungssystem (10) davon umfasste Automatisierungsgeräte (20) kommunikativ miteinander zu verbinden, und das Mittel (34, 42) zur Ausführung des Verfahrens nach einem der vorangehenden Ansprüche umfasst.

7. Computerprogramm (34) mit Programmcodemitteln, um alle Schritte von jedem beliebigen der Ansprüche 1 bis 5 durchzuführen, wenn das Computerprogramm (34) auf einem elektronischen Gerät (24) gemäß Anspruch 6 ausgeführt wird.

8. Digitales Speichermedium mit elektronisch auslesbaren Steuersignalen, die so mit einem elektronischen Gerät (24) gemäß Anspruch 6 zusammenwirken können, dass ein Verfahren nach einem der Ansprüche 1 bis 5 ausgeführt wird.

9. Elektronisches Gerät (24) nach Anspruch 6, mit einer Verarbeitungseinheit (30) und einem Speicher (32), in den als Mittel (34) zur Ausführung des Verfahrens nach einem der Ansprüche 1 bis 4 ein Computerprogramm (34) nach Anspruch 7 geladen ist, das im Betrieb des Gerätes (24) durch dessen Verarbeitungseinheit (30) ausgeführt wird.

10. Automatisierungssystem (10) mit zumindest einem elektronischen Gerät (24) gemäß Anspruch 6 oder Anspruch 9.
